# EUROPÄISCHE PATENTSCHRIFT

(11) **EP 2 009 331 B1**
(45) Veröffentlichungstag und Bekanntmachung des Hinweises auf die Patenterteilung: **12.10.2011**
(21) Anmeldenummer: 08007551.8
(22) Anmeldetag: 18.04.2008
(51) Int. Cl.: F16J 15/20

(54) **Stopfbuchspackung**
Packing case
Presse-étoupe

(30) Priorität: 26.06.2007 DE 102007029620
(43) Veröffentlichungstag der Anmeldung: 31.12.2008
(73) Patentinhaber: Richter Chemie-Technik GmbH, 47906 Kempten (DE)
(72) Erfinder: Sett, Manfred, 47906 Kempen (DE); Heinze, Werner, 47669 Wachtendonk (DE)
(74) Vertreter: Cohausz Hannig Borkowski Wißgott

(56) Entgegenhaltungen:
- EP-B1- 0 603 528
- GB-A- 2 030 237
- US-A- 3 833 228

## Beschreibung

Die Erfindung betrifft eine Stopfbuchspackung für Schwenk- und Hubarmaturen, deren Dichtelemente formschlüssig miteinander verbunden sind.

Aus EP 0603 528 B1 oder US 2356947 sind einstückige Stopfbuchspackungen mit mehreren ringförmigen Dichtelementen bekannt. Wird die Stopfbuchse kraftbeaufschlagt, so spreizen sich die faltenbalgförmigen Dichtelementen und dichten im Stopfbuchsraum und an der Welle ab.

Nachteilig ist dabei, dass beim Einbau des faltenbalgförmigen Dichtelementes es infolge der Reibung bereits zur Spreizung kommt, bevor das Dichtelement komplett eingebaut ist, sobald die erste ringförmige Fläche den Stopfbuchsraum und die Welle berührt. Das Dichtelement muss dann mit relativ hohem Kraftaufwand in die Stopfbuchse gepresst werden, wobei die Oberflächen von Stopfbuchspackung, Stopfbuchsraum und Welle durch in Dichtrichtung verlaufende Riefen beschädigt werden können. Beim Entfernen des Dichtelementes aus dem Stopfbuchsraum muss ebenso mit entsprechendem Kraftaufwand die Spreizung des Dichtelementes überwunden werden.

Aus der US 3 833 228 ist eine Stopfbuchspackung für Schwenk- und Hubarmaturen bekannt, aufweisend zwei Dichtelemente, die formschlüssig miteinander verbunden sind, wobei das erste Dichtelement an seiner Außenseite zumindest zwei konische Abschnitte aufweist und das zweite Dichtelement an seiner Innenseite korrespondierende konische Abschnitte aufweist, wobei die konischen Abschnitte der beiden Dichtelemente jeweils axial hintereinander angeordnet sind.

Nachteilig ist dabei, dass die zwei Dichtelemente untereinander keinen sehr festen Halt haben und sich leicht voneinander lösen können.

Aus der GB 2 030 237 ist eine aus drei ringförmigen Elementen bestehende Anordnung bekannt, wobei die Elemente teilweise seitlich eine Ausnehmung aufweisen, in die ein korrespondierender Vorsprung eines anderen Elements eingreift. Nachteilig bei dieser Anordnung ist es, dass sich ohne eine zusätzliche Halterung kein fester Sitz einstellt.

Des Weiteren ist aus dem Stand der Technik bekannt, in der Stopfbuchse von Schwenk- oder Hubarmaturen mehrere Ringe übereinander koaxial anzuordnen. Diese Ringe sind zum Beispiel aus Seidenschnur geflochten. Geflochtene Packungsringe erfordern eine relativ hohe axiale Anpresskraft, um die erforderliche radiale Dichtkraft zu erzeugen. Werden diese Packungsringe in kunststoffbeschichteten Stopfbuchsen eingesetzt, so kann es infolge der relativ hohen axialen Anpresskraft zu einer unzulässigen Deformation oder gar Beschädigung des Kunststoffes im Bereich des Stopfbuchsbodens kommen.

Eine andere Lösung sind Dachmanschetten - Dichtringe. Diese sind für Applikationen bei korrosiven Medien vorzugsweise aus PTFE gefertigt und erfordern einen mit engen Toleranzen gefertigten Stopfbuchs - Einbauraum und Wellendurchmesser. Aufgrund der engen Toleranzen ist die Herstellung mit entsprechenden Kosten verbunden.

Aufgabe der Erfindung ist es, eine Stopfbuchspackung der eingangs genannten Art so zu verbessern, dass diese sich leicht und ohne Hilfsmittel von Hand in den Stopfbuchsraum einsetzen und ebenso wieder entfernen lässt, einen einfachen konstruktiven Aufbau aufweist und bereits bei geringen axialen Anpresskräften eine hohe radiale Dichtkraft bereitstellt.

Diese Aufgabe wird erfindungsgemäß durch eine Stopfbuchspackung gemäß Anspruch 1 gelöst.

Dadurch, dass die Stopfbuchspackung für Schwenk- und Hubarmaturen zwei Dichtelemente aufweist, die formschlüssig miteinander verbunden sind, wobei das erste Dichtelement an seiner Außenseite zumindest zwei konische Abschnitte aufweist und das zweite Dichtelement an seiner Innenseite korrespondierende konische Abschnitte aufweist, wird bei einem konstruktiv einfachen Aufbau aus zumindest zwei ineinander greifenden Dichtelementen oder Dichtringen eine Stopfbuchspackung geschaffen, die sich leicht und ohne Werkzeuge montieren, d.h. in den Stopfbuchsraum einsetzen lässt.

Besonders vorteilhaft ist dabei, dass die erfindungsgemäße Stopfbuchspackung einen kostengünstigen Fertigungsprozess gestattet und größere Form- und Toleranzabweichungen des Stopfbuchsraumes und der Welle kompensieren kann. Weiter ermöglicht es die Erfindung, dass bei einer geringen axialen Anpresskraft eine ausreichend hohe radiale Dichtkraft erzielt wird.

Dabei sind die konischen Abschnitte der beiden Dichtelemente jeweils axial hintereinander angeordnet, wobei die hintereinander angeordneten, konischen Abschnitte oder Flächen des ersten Dichtelementes zumindest einen ringförmigen Absatz bilden, der von einem korrespondierenden ringförmigen Absatz des zweiten Dichtelementes hintergreifbar ist.

Hierdurch ist es möglich eine formschlüssige Verbindung zu schaffen, da durch die geometrische Gestaltung und Anordnung der axial hintereinander angeordneten, konischen Flächen an beiden Dichtelementen jeweils ein Absatz geschaffen wird, der der formschlüssigen Verbindung der Dichtelemente oder Dichtringe dient. Es wird somit bei einem einfachen Aufbau ein fester Zusammenhalt der Stopfbuchspackung erzielt.

Ferner schließen die konischen Abschnitte mit der Achse der Dichtelemente einen spitzen Winkel ein, d.h. dass der Winkel der konischen Absätze so gewählt wird, dass keine Selbsthemmung auftreten kann.

Weitere vorteilhafte Ausgestaltungen sind in den Unteransprüchen angegeben.

Vorzugsweise stimmt die Anzahl der konischen Abschnitte am ersten Dichtelement oder Dichtring mit der Anzahl der korrespondierenden konischen Abschnitte am zweiten Dichtelement oder Dichtring überein, vorzugsweise weist jedes Dichtelement jeweils zwei konische, axial hintereinander angeordnete Abschnitte oder Flächenbereiche auf.

Bevorzugt weist das erste Dichtelement einen größeren Innendurchmesser auf als der abzudichtende Wellendurchmesser und/oder das zweite Dichtelement weist einen geringeren Außendurchmesser auf als der Durchmesser des abzudichtenden Stopfbuchsinnenraumes. Hierdurch wird ein einfacher Einbau ermöglicht, wobei unter Last, d.h. unter einer axialen Kraftbeaufschlagung der Stopfbuchspackung es zu einem zuverlässigen Abdichten kommt.

Vorzugsweise sind an der Innenseite des ersten Dichtelementes ein oder mehrere ringförmige Absätze angeordnet sind, die vorzugsweise eine Tiefe von 0.2 bis 0.3 mm aufweisen. Alternativ oder kumulativ können an der Außenseite des zweiten Dichtelementes ein oder mehrere ringförmige Absätze angeordnet sein, die ebenfalls eine Tiefe von 0.2 bis 0.3 mm aufweisen können. Diese Absätze wirken im Betrieb wie eine Reihe hintereinander geschaltete Dichtungen.

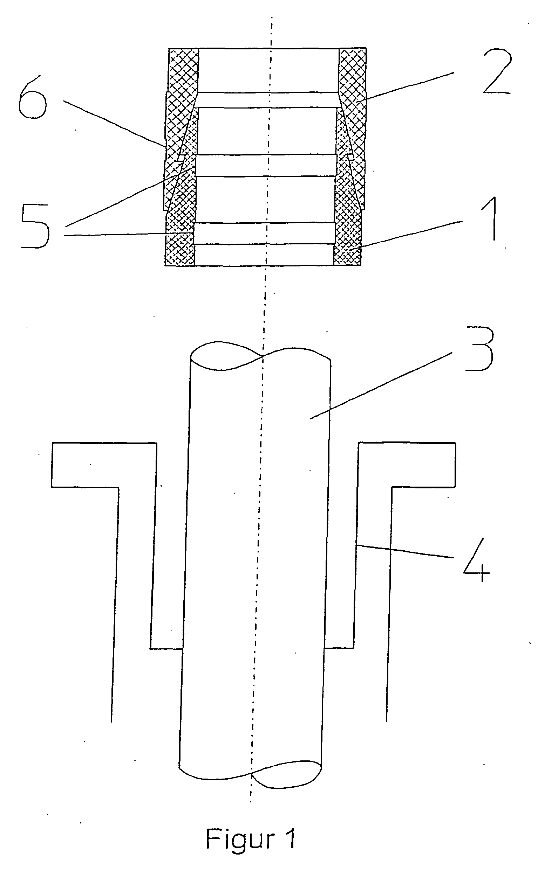

In Figur 1 ist ein Ausführungsbeispiel der Erfindung dargestellt und wird nachfolgend erläutert.

In Figur 1 dargestellt ist im oberen Teil ein Schnitt durch eine Stopfbuchspackung, die dadurch gebildet ist, dass zwei Dichtringe bzw. Dichtelemente 1, 2 miteinander kombiniert werden. Diese sind aus einem elastisch verformbaren Material, vorzugsweise PTFE gefertigt. Ein erster Dichtring 1 ist an seiner Außenfläche mit zwei hintereinander angeordneten konischen Flächen ausgeführt. Der zweite Dichtring 2 ist an seiner Innenfläche mit hierzu korrespondierenden, d.h. ebensolchen zwei hintereinander angeordneten konischen Flächen ausgeführt.

Beide Dichtringe 1, 2 rasten beim Zusammenbau im Bereich des Absatzes, der aufgrund der Hintereinanderschaltung der konischen Flächen entsteht, formschlüssig ineinander ein indem der am ersten Dichtelement 1 gebildete Absatz von dem an dem zweiten Dichtelement 2 korrespondierenden Absatz hintergriffen wird. Dadurch entsteht eine einteilige Dichtelement - Patrone.

Der Innendurchmesser des Dichtringes 1 ist größer als der abzudichtende Wellendurchmesser 3. Der Außendurchmesser des Dichtringes 2 ist kleiner als der Durchmesser des abzudichtenden Stopfbuchsraumes 4. Dadurch lässt sich die Dichtelement - Patrone leicht von Hand in den Stopfbuchsraum einbauen und ebenso leicht demontieren.

Wird die Dichtelement - Patrone mit einer axialen Stopfbuchskraft beaufschlagt, so wird infolge der Kegelwirkung der erste Dichtring 1 radial komprimiert und an die abzudichtende Welle 3 gepresst. Der zweite Dichtring 2 wird radial aufgeweitet und in den Stopfbuchsraum gepresst. Die Komprimierung des ersten Dichtringes 1 und die Aufweitung des zweiten Dichtringes 2 können gröbere Form- und Toleranzabweichungen des Stopfbuchsraumes und der Welle 3 kompensieren. Beim Entfernen der Stopfbuchskraft wird aufgrund der Elastizität des Werkstoffes der Dichtringe 1, 2 die Aufweitung und Komprimierung rückgängig gemacht, so dass die Dichtelement - Patrone leicht von Hand aus der Stopfbuchse entnommen werden kann. Dabei ist es von Vorteil, wenn der Winkel der konischen Absätze so gewählt wird, dass keine Selbsthemmung auftreten kann.

Wird die Dichtelement - Patrone mit einer axialen Stopfbuchskraft beaufschlagt, wird aufgrund des Kegelgesetzes die relativ geringe axiale Vorspannkraft in eine relativ hohe radiale Anpresskraft umgesetzt, genau an den radialen Flächen, wo abgedichtet werden soll. Die radiale Anpresskraft in Kombination mit der radialen Reibung im Stopfbuchsraum 4 und an der Welle 3 führt dazu, dass das Dichtelement aufgrund seiner radialen Klemmwirkung kaum Axialkraft im Bereich des Stopfbuchsbodens überträgt so dass auch im Fall einer Kunststoffbeschichteten Stopfbuchse keine unzulässige Deformation des Stopfbuchsbodens auftreten kann.

Der Innendurchmesser bzw. die Innenfläche des ersten Dichtringes 1 ist beim dargestellten Ausführungsbeispiel mit mehreren ringförmigen Absätzen 5 ausgeführt, die vorzugsweise nur 0.2 bis 0.3 mm tief sind. Ebensolche Absätze 6 befinden sich am Außendurchmesser bzw. an der Außenfläche des zweiten Dichtringes 2. Dadurch wird im Dichtbereich zur Welle 3 und zum Stopfbuchsraum 4 die Flächenpressung gesteigert, um die Dichtwirkung zu erhöhen. Es wird damit quasi die Dichtwirkung von hintereinander geschalteten Dichtringen simuliert. Bei einer nicht dargestellten Alternative ist jeweils nur ein einzelner Absatz 5, 6 vorgesehen.

## Patentansprüche

1. Stopfbuchspackung für Schwenk- und Hubarmaturen, aufweisend zwei Dichtelemente (1, 2), die formschlüssig miteinander verbunden sind, wobei das erste Dichtelement (1) an seiner Außenseite zumindest zwei konische Abschnitte aufweist und das zweite Dichtelement (2) an seiner Innenseite korrespondierende konische Abschnitte aufweist, wobei die konischen Abschnitte der beiden Dichtelemente (1, 2) jeweils axial hintereinander angeordnet sind, **dadurch gekennzeichnet, dass** die hintereinander angeordneten, konischen Abschnitte oder Flächen des ersten Dichtelementes (1) zumindest einen ringförmigen Absatz bilden, der von einem korrespondierenden ringförmigen Absatz des zweiten Dichtelementes (2) hintergreifbar ist und wobei die konischen Abschnitte mit der Achse der Dichtelemente (1, 2) einen spitzen Winkel einschließen.

2. Stopfbuchspackung nach Anspruch 1, **dadurch gekennzeichnet, dass** die Anzahl der konischen Abschnitte am ersten Dichtelement (1) mit der Anzahl der korrespondierenden konischen Abschnitte am zweiten Dichtelement (2) übereinstimmt.

3. Stopfbuchspackung nach Anspruch 1 oder 2, **dadurch gekennzeichnet, dass** das erste Dichtelement (1) einen größeren Innendurchmesser aufweist als der abzudichtende Wellendurchmesser (3).

4. Stopfbuchspackung nach einem der vorherigen Ansprüche, **dadurch gekennzeichnet, dass** das zweite Dichtelement (2) einen geringeren Außendurchmesser aufweist als der Durchmesser des abzudichtenden Stopfbuchsinnenraumes (4).

5. Stopfbuchspackung nach einem der vorherigen Ansprüche, **dadurch gekennzeichnet, dass** an der Innenseite des ersten Dichtelementes (1) ein oder mehrere ringförmige Absätze (5) angeordnet sind, die insbesondere eine Tiefe von 0.2 bis 0.3 mm aufweisen.

6. Stopfbuchspackung nach einem der vorherigen Ansprüche, **dadurch gekennzeichnet, dass** an der Außenseite des zweiten Dichtelementes (2) ein oder mehrere ringförmige Absätze (6) angeordnet sind, die insbesondere eine Tiefe von 0.2 bis 0.3 mm aufweisen.

## Claims

1. Packing case for pivoting and lifting fittings with two sealing elements (1, 2), which are connected to each other positively, in which the first sealing element (1) has at least two conical sections on its outside and the second sealing element (2) has corresponding conical sections on its inside, in which the conical sections of both sealing elements (1, 2) are arranged one behind the other axially, **characterised in that** the conical sections arranged one behind the other axially or surface areas of the first sealing element (1) form at least one ring shaped offset, which may be gripped by a corresponding ring shaped offset of the second sealing element (2), and in which the conical sections enclose an acute angle with the axis of the sealing elements (1, 2).

2. Packing case according to claim 1, **characterised in that** the number of conical sections on the first sealing element (1) agrees with the number of corresponding conical sections on the second sealing element (2).

3. Packing case according to claim 1 or 2, **characterised in that** the first sealing element (1) has a greater internal diameter than the diameter of the shaft to be sealed (3).

4. Packing case according to one of the previous claims, **characterised in that** the second sealing element (2) has a smaller external diameter than the diameter of the cavity of the packing case to be sealed (4).

5. Packing case according to one of the previous claims, **characterised in that** one or several ring shaped offsets (5) are arranged on the inside of the first sealing element (10), which have a depth of 0.2 to 0.3 mm in particular.

6. Packing case according to one of the previous claims, **characterised in that** one or several ring shaped offsets (6) are arranged on the outside of the second sealing element (2), which have a depth of 0.2 to 0.3 mm in particular.

## Revendications

1. Garniture de presse-étoupe pour robinetterie mélangeuse pivotante, comprenant deux éléments d'étanchéité (1, 2) assemblés entre eux par coopération de forme, le premier élément d'étanchéité (1) présentant sur son côté extérieur au moins deux sections coniques et le second élément d'étanchéité (2) présentant sur son côté intérieur des sections coniques correspondantes, les sections coniques des deux éléments d'étanchéité (1, 2) étant disposées chacune l'une derrière l'autre dans la direction axiale, **caractérisée en ce que** les sections ou surfaces coniques du premier élément d'étanchéité (1), disposées l'une derrière l'autre, forment au moins un épaulement annulaire, qui peut être enserré par un épaulement annulaire correspondant du second élément d'étanchéité (2), et les sections coniques formant un angle aigu avec l'axe des éléments d'étanchéité (1, 2).

2. Garniture de presse-étoupe suivant la revendication 1, **caractérisée en ce que** le nombre des sections coniques sur le premier élément d'étanchéité (1) coïncide avec le nombre des sections coniques correspondantes sur le second élément d'étanchéité (2).

3. Garniture de presse-étoupe suivant l'une des revendications 1 et 2, **caractérisée en ce que** le premier élément d'étanchéité (1) présente un diamètre intérieur plus grand que le diamètre de tige (3) à étanchéifier.

4. Garniture de presse-étoupe suivant l'une des revendications précédentes, **caractérisée en ce que** le second élément d'étanchéité (2) présente un diamètre extérieur plus petit que le diamètre de l'espace interne (4) du presse-étoupe à étanchéifier.

5. Garniture de presse-étoupe suivant l'une des revendications précédentes, **caractérisée en ce qu'**un ou plusieurs épaulements annulaires (5) sont disposés sur le côté intérieur du premier élément d'étanchéité (1), lesquels épaulements présentent en particulier une profondeur de 0,2 à 0,3 mm.

6. Garniture de presse-étoupe suivant l'une des revendications précédentes, **caractérisée en ce qu'**un ou plusieurs épaulements annulaires (6) sont disposés sur le côté extérieur du second élément d'étanchéité (2), lesquels épaulements présentent en particulier une profondeur de 0,2 à 0,3 mm.
